# Europäisches Patentamt

# European Patent Office

# Office européen des brevets

(19)

(11) Veröffentlichungsnummer: **0 063 702**
**A1**

(12) **EUROPÄISCHE PATENTANMELDUNG**

(21) Anmeldenummer: **82102661.4**

(22) Anmeldetag: **30.03.82**

(51) Int. Cl.³: **B 25 J 11/00, F 16 H 57/12**

(30) Priorität: **22.04.81 DE 3115947**

(43) Veröffentlichungstag der Anmeldung: **03.11.82**
**Patentblatt 82/44**

(84) Benannte Vertragsstaaten: **AT BE CH FR GB IT LI NL SE**

(71) Anmelder: **Richter, Hans, Ortlerstrasse 77, D-8900 Augsburg (DE)**

(72) Erfinder: **Richter, Hans, Ortlerstrasse 77, D-8900 Augsburg (DE)**

(74) Vertreter: **Charrier, Rolf, Dipl.-Ing., Postfach 260 Rehlingenstrasse 8, D-8900 Augsburg 31 (DE)**

(54) **Vorrichtung zum Antrieb des Karussells bei einem Industrieroboter.**

(57) Zum Antrieb des Karussells (4) bei einem Industrieroboter ist ein Elektromotor mit einem Zykloidengetriebe auf einer federbelasteten Schwinge (6) des Karussells (4) angeordnet. Das Zykloidengetriebe (9) treibt ein Ritzel (5) an, das in Eingriff steht mit einem feststehenden Zahnkranz (2). Federn drücken hierbei das Ritzel (5) in Eingriff mit dem Zahnkranz (2), wobei die Eingriffstiefe über einen Gewindebolzen (11) einstellbar ist. Das Ritzel (5) trägt kranzförmig angeordnete Mitnehmerbolzen, welche in kranzförmig angeordnete Mitnehmerbohrungen der beiden Kurvenscheiben des Zykloidengetriebes (9) eingreifen.

EP 0 063 702 A1

Dipl.-Ing.

*Rolf Charrier*

Patentanwalt

Rehlingenstraße 8 · Postfach 260
D-8900 Augsburg 31
Telefon 08 21/3 60 15 + 3 60 16
Telex 53 3 275
Postscheckkonto. München Nr. 1547 89-801

0063702

8402/35/ch-cv           --1--          Augsburg, 29. März 1982

Hans Richter
Ortlerstr. 77
D- 8900 Augsburg

## Vorrichtung zum Antrieb des Karussells bei einem Industrieroboter

Die Erfindung betrifft eine Vorrichtung zum Antrieb des Karussells bei einem Industrieroboter mittels eines Elektromotors, der über ein Zykloidengetriebe ein Ritzel antreibt, das mit dem Getriebe und dem Motor auf einer am Karussell gelagerten federbelasteten Schwinge angeordnet ist, wobei bei einer Drehung des Ritzels das Karussell sich um einen feststehenden Zahnkranz dreht.

Bei einem aus der DE-OS 28 30 909 bekannten Vorrichtung wird das Ritzel und der Zahnkranz umschlungen von einer Kette, die am Zahnkranz befestigt ist. Die an der Schwinge wirkenden Federn, welche diese nach außen drücken, wodurch die Kette gespannt wird, wirken als Dämpfungsfedern. Die Drehbewegung des Karussells ist durch die Befestigung der Kette am Zahnkranz begrenzt. Bei einer Dehnung der Kette ist die Reproduzierbarkeit zwischen der Drehung des Motors und derjenigen des Karussells verfälscht. Bekanntlich wird die winkelmäßige Stellung des

--2--

Karussells durch Winkelmeßgeräte am Motor gemessen.
Bei Überlastung soll der Motor außer Eingriff mit dem
Zahnkranz kommen, was bei Verwendung starker Federn
nicht gewährleistet ist, die jedoch wiederum wegen einer
spielfreien Übertragung der Drehbewegung vom Motor auf
auf den Zahnkranz erforderlich sind.

Es besteht die Aufgabe, die Vorrichtung so auszubilden,
das eine spielfreie Übertragung der Drehbewegung vom
Motor auf den Zahnkranz möglich ist und das Ritzel
bei Überlastung dem Zahnkranz auszuweichen vermag.

Gelöst wird diese Aufgabe mit den Merkmalen des Anspruches
1. Vorteilhafte Ausgestaltungen sind den Unteransprüchen
entnehmbar.

Ein Ausführungsbeispiel wird nachfolgend anhand der
Zeichnungen näher erläutert. Es zeigen:

Fig. 1   eine teilweise im Schnitt dargestellte Seitenansicht der Gesamtvorrichtung ;

Fig. 2   eine Draufsicht auf diese Vorrichtung;

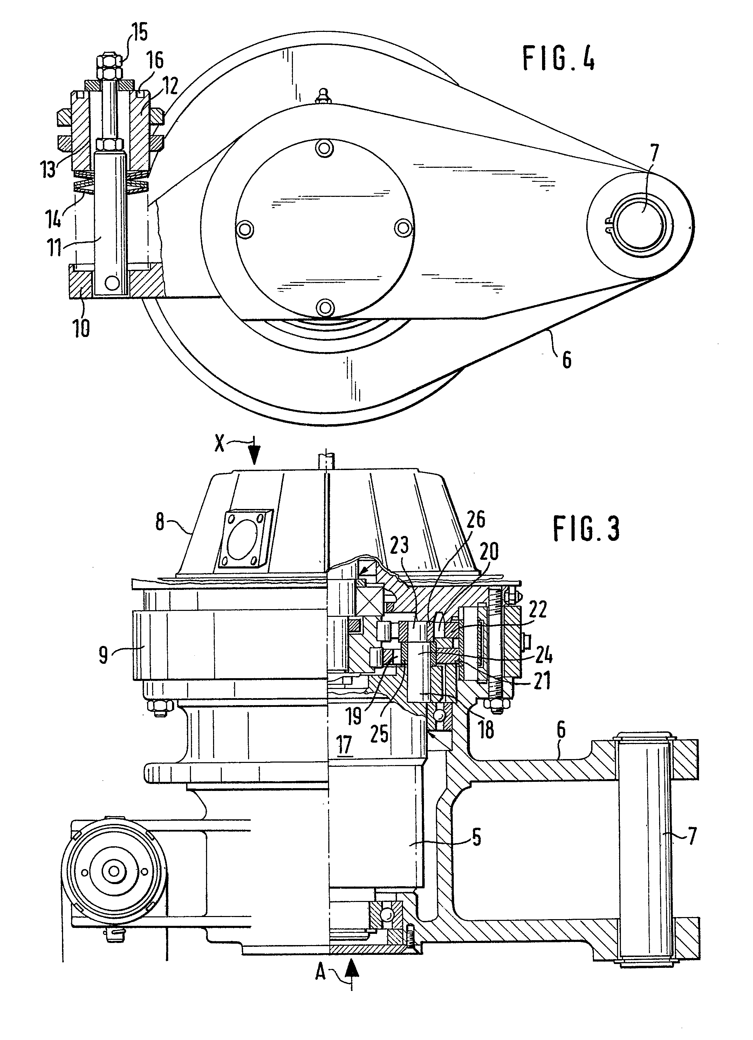

Fig. 3   eine teilweise im Schnitt dargestellte Seitenansicht der Schwinge
und

Fig. 4   eine Ansicht der Schwinge in
Pfeilrichtung A nach Fig. 3.

0063702

Mit einer Tragplatte 1 starr verbunden ist ein Zahnkranz 2. Gegenüber diesem Zahnkranz 2 um die Achse 3 drehbar ist ein Karussell 4 vorgesehen. Die Drehung dieses Karussells 4 wird bewirkt durch Drehung des Ritzels 5, welches von einer Schwinge 6 gelagert wird, die ihrerseits durch den vertikal verlaufenden Bolzen 7 am Karussell 4 gelagert ist.

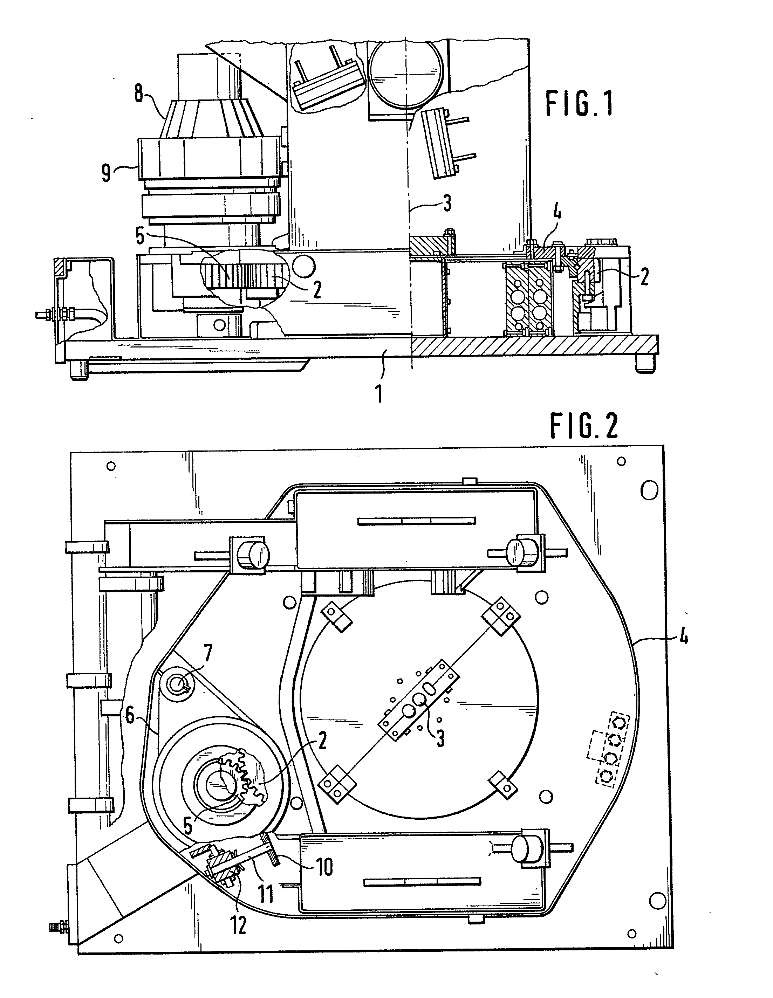

Wie insbesondere der Fig. 2 entnehmbar ist, steht das Ritzel 5 in Eingriff mit dem Zahnkranz 2.

Der Antrieb des Ritzels 5 wird bewirkt durch einen Elektromotor 8, der ein Zykloidengetriebe antreibt, das in seiner Gesamtheit mit 9 bezeichnet ist.

Die Eingriffstiefe des Ritzels 5 in den Zahnkranz 2 ist einstellbar. Die Schwinge 6 weist an der dem Bolzen 7 abgewandten Seite einen Ansatz 10 auf, an welchem ein Gewindebolzen 11 angelenkt ist. Dieser Gewindebolzen 11 ist durch eine Bohrung 13 eines Widerlagers 12 geführt, wobei das Widerlager 12 starr mit dem Karussell 4 verbunden ist. Zwischen dem Ansatz 10 und dem Widerlager 12 sind Tellerfedern 14 vorgesehen, welche die Schwinge 6 in Richtung auf den Zahnkranz 2 drücken. Die Bewegung der Schwinge 6 in Richtung auf den Zahnkranz 2 wird begrenzt indem der Schraubkopf 15 des Gewindebolzens 11 gegen die äußere Schulter 16 des karussellfesten Widerlagers 12 anliegt. Je nach Einstellung des Schraubkopfes 15 greift also das Ritzel 5 mehr oder weniger tief in den Zahnkranz 2 ein. Bei einer Überlastung vermag das Ritzel 5 dem Zahnkranz 2 auszuweichen, wobei dann die Federn 14 zusammengepresst werden. Hierbei hebt der Schraubkopf 15 von der Schulter 16 ab.

Die Übertragung der Drehbewegung des Motors 8 auf das
Ritzel 5 erfolgt spielfrei über das Zykloidengetriebe
9. Zu diesem Zweck trägt die Welle 17 des Ritzels 5
Mitnehmerbolzen 18. Diese Mitnehmerbolzen 18 greifen
in die kranzförmig angeordneten Mitnehmerbohrungen
19, 20 der beiden Kurvenscheiben 21, 22 des Getriebes
9 ein. Die Bolzenteile 23 welche in die Mitnehmerbohrungen 20 der einen Kurvenscheibe 22 eingreifen
sind exzentrisch angeordnet zu den Bolzenteilen 24,
welche in die Mitnehmerbohrungen 19 der anderen Kurvenscheibe 21 eingereifen. Beide Bolzenteile 23, 24 tragen voneinander getrennte elastische Mitnehmerrollen
25, 26.

Durch diese Ausbildung des Getriebes erfolgt eine
spielfreie Übertragung der Drehbewegung des Motors 8
auf das Ritzel 5. Durch Einstellen der Eingriffstiefe
des Ritzels 5 in den Zahnkranz 2 ist eine spielfreie
Übertragung der Drehbewegung des Ritzels 5 in Bezug auf
den Zahnkranz 2 möglich.

Dipl.-Ing.
*Rolf Charrier*
Patentanwalt

Rehlingenstraße 8 · Postfach 260
D-8900 Augsburg 31
Telefon 08 21/3 60 15 + 3 60 16
Telex 53 3 275
Postscheckkonto. München Nr. 1547 89-801

8402/35/ch-cv          --5--

Anm.: Hans Richter
Augsburg, 29. März 1982

## Ansprüche

1. Vorrichtung zum Antrieb des Karussells (4) bei einem Industrieroboter mittels eines Elektromotors (8), der über ein Zykloidengetriebe (9) ein Ritzel (5) antreibt, das mit dem Getriebe (9) und dem Motor (8) auf einer am Karussell (4) gelagerten federbelasteten Schwinge (6) angeordnet ist, wobei bei einer Drehung des Ritzels (5) das Karussell (4) sich um einen feststehenden Zahnkranz (2) dreht, dadurch g e k e n n z e i c h n e t , daß die zwischen Schwinge (6) und Karussell (4) angeordneten Federn (14) die Schwinge (6) in Eingriff mit dem Zahnkranz (2) und gegen einen einstellbaren karussellfesten Anschlag (12) drücken, wobei letzterer für die Eingriffstiefe zwischen Ritzel (5) und Zahnkranz (2) bestimmend ist und daß das Ritzel (5) Mitnehmerbolzen (18) trägt, die in die kranzförmig angeordneten Mitnehmerbohrungen (19, 20) der beiden Kurvenscheiben (21, 22) des Getriebes (9) eingreifen.

2. Vorrichtung nach Anspruch 1, dadurch g e k e n n - z e i c h n e t , daß die in die Mitnehmerbohrungen (20) der einen Kurvenscheibe (22) eingreifenden Bolzenteile (23) exzentrisch zu den in die Mitnehmerbohrungen (19) der anderen Kurvenscheibe (21) eingreifenden Bolzenteile (24) angeordnet sind.

3. Vorrichtung nach Anspruch 2, dadurch  g e k e n n - z e i c h n e t, daß die beiden Bolzenteile (23, 24) jedes Mitnehmerbolzens (18) für jede der Mitnehmerbohrungen (19, 20) elastische Mitnehmerrollen (25, 26) tragen.

4. Vorrichtung nach Anspruch 1, dadurch  g e k e n n - z e i c h n e t, daß die Federn (14) Tellerfedern sind, durch·die ein Gewindebolzen (11) geführt ist, der einerseits mit der Schwinge (6) verbunden ist und andererseits mit seinem Schraubkopf (15) gegen eine karussellfeste Schulter (16) anliegt.

5. Vorrichtung nach Anspruch 1, dadurch  g e k e n n - z e i c h n e t , daß die Federn (14) Blattfedern sind, welche karussellfest eingespannt     gegen die Schwinge (6) anliegen.

FIG.1

FIG.2

FIG.4

FIG.3

Europäisches
Patentamt

**EUROPÄISCHER RECHERCHENBERICHT**

0063702
Nummer der Anmeldung

EP 82 10 2661

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | GB-A- 541 767 (GUY)<br>* Seite 2, Zeilen 39-112 *<br><br>--- | 1-4 | B 25 J 11/00<br>F 16 H 57/12 |
| Y,D | DE-A-2 830 909 (SCHLATTER)<br>* Ansprüche 1-4,10,11; Seite 5,<br>Zeile 8 - Seite 7, Zeile 9 *<br><br>--- | 1-4 | |
| A | US-A-3 760 956 (BURCH)<br><br>--- | | |
| A | US-A-3 995 509 (BACKUS et al.)<br><br>--- | | |
| A | DE-A-2 729 234 (OLYMPUS<br>OPTICAL)<br>* Anspruch 2 *<br><br>----- | 5 | |

RECHERCHIERTE
SACHGEBIETE (Int. Cl. 3)

B 25 J 9/00
B 25 J 11/00
B 65 G 29/00
F 16 H 57/12
F 41 F 21/14

Der vorliegende Recherchenbericht wurde für alle Patentansprüche erstellt.

| Recherchenort | Abschlußdatum der Recherche | Prüfer |
|---|---|---|
| DEN HAAG | 02-08-1982 | LAMMINEUR P.C.G. |

KATEGORIE DER GENANNTEN DOKUMENTEN
X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
    nach dem Anmeldedatum veröffentlicht worden ist
D : in der Anmeldung angeführtes Dokument
L : aus andern Gründen angeführtes Dokument

& : Mitglied der gleichen Patentfamilie, überein-
    stimmendes Dokument

EPA Form 1503 03.82